# EUROPEAN PATENT SPECIFICATION

(11) **EP 2 778 777 B1**
(45) Date of publication and mention of the grant of the patent: **07.03.2018**
(21) Application number: 13197258.0
(22) Date of filing: 13.12.2013
(51) Int. Cl.: G02F 1/1343

(54) **Liquid crystal display device**
Flüssigkristallanzeigevorrichtung
Dispositif d'affichage à cristaux liquides

(30) Priority: 12.03.2013 KR 20130026332
(43) Date of publication of application: 17.09.2014
(73) Proprietor: Samsung Display Co., Ltd., Gyeonggi-do (KR)
(72) Inventor: Kim, Hoon, GYEONGGI-DO (KR); Shin, Ki Chul, GYEONGGI-DO (KR); Yang, Dan Bi, GYEONGGI-DO (KR)
(74) Representative: Santarelli

(56) References cited:
- US-A1- 2010 060 676
- US-A1- 2010 110 358

## Description

### BACKGROUND

### (a) Field

Exemplary embodiments of the invention relate to a liquid crystal display device.

### (b) Description of the Related Art

A liquid crystal display device, which is one of the most widely used types of flat panel display, typically includes two display panels with field generating electrodes such as a pixel electrode, a common electrode and the like, and a liquid crystal layer interposed therebetween. In the liquid crystal display device, an electric field is generated in the liquid crystal layer by applying potentials to the field generating electrodes, and determines directions of liquid crystal molecules by the generated electric field, thus controlling polarization of incident light to display images.

The liquid crystal display device includes a vertically aligned mode liquid crystal display device, in which longitudinal axes of liquid crystal molecules are substantially vertically aligned with respect to the display panels when the electric field is not applied.

In the vertically aligned mode liquid crystal display device, various structures in which a pixel is divided into two subpixels have been developed to secure side visibility. In such a vertical aligned mode liquid crystal display device, the pixel using the two subpixels may include two or more thin film transistors and a number of wires (e.g., data lines, gate lines, and the like) connected to the two or more thin film transistors.

A liquid crystal display device is known from publication US 2010/060676.

### SUMMARY

Exemplary embodiments of the invention relate to a liquid crystal display device with improved transmittance and an aperture ratio and secured side visibility.

An exemplary embodiment of the invention provides a liquid crystal display device as defined in Claim 1. It includes: a first substrate; a second substrate disposed opposite to the first substrate; a liquid crystal layer disposed between the first substrate and the second substrate and including liquid crystal molecules, which are substantially vertically aligned when an electric field is not generated in the liquid crystal layer; and a plurality of pixels, each of which includes a first subpixel and a second subpixel, where each of the first subpixel and the second subpixel includes: a first electrode disposed on the first substrate and having a planar shape; a second electrode disposed opposite to and spaced apart from the first electrode and including a linear electrode; and a third electrode disposed on the second substrate and having a planar shape, and a potential applied to the second electrode of the first subpixel and a potential applied to the second electrode of the second subpixel are different from each other. Also, the first electrode of the first subpixel and the first electrode of the second subpixel are electrically connected to each other.

In the invention, the third electrode of the first subpixel and the third electrode of the second subpixel are electrically connected to each other.

In an exemplary embodiment, the first electrode may receive a data potential.

In the invention, either the first electrodes of the first and second subpixels or the third electrodes of the first and second subpixels receive a common potential.

In an exemplary embodiment, the third electrode of a pixel may be electrically connected to the third electrode of an adjacent pixel.

In an exemplary embodiment, the second electrode of the first subpixel may receive a first bias potential having a predetermined level, and the second electrode of the second subpixel may receive a second bias potential which has a predetermined level different from the predetermined level of the first bias potential.

In an exemplary embodiment, at least one of the first and second bias potentials may be a storage potential.

In an exemplary embodiment, the first bias potential may be the data potential.

In an exemplary embodiment, the second electrode of the first subpixel may receive a first bias potential having a predetermined level, and the second electrode of the second subpixel may be a floating potential which may not receive the potential.

In an exemplary embodiment, the first bias potential may be a storage potential.

In an exemplary embodiment, the first bias potential may be the data potential.

In an exemplary embodiment, the third electrode may receive a data potential.

In an exemplary embodiment, the first electrodes may be electrically connected to each other even between the adjacent pixels.

In an exemplary embodiment, the first electrode of the first subpixel and the first electrode of the second subpixel in a pixel are electrically connected to each other, and the second electrode of the first subpixel and the second electrode of the second subpixel in an adjacent pixel may be electrically connected to each other.

In an exemplary embodiment, at least one of the first and second bias potentials may be a storage potential.

In an exemplary embodiment, the first bias potential may be the common potential.

In an exemplary embodiment, the first bias potential may be a storage potential.

In an exemplary embodiment, the first bias potential may be the common potential.

In an exemplary embodiment, the linear electrode of the second electrode may include a stem electrode, and a plurality of minute branch electrodes extending from the stem electrode.

In an exemplary embodiment, the second electrode of the first subpixel in a pixel may further include a connection electrode connected to the second electrode of the first subpixel in an adjacent pixel, and the second electrode of the second subpixel in the pixel may further include a connection electrode connected to the second electrode of the second subpixel in the adjacent pixel.

In an exemplary embodiment, the linear electrode of the second electrode may further include an outer portion which surrounds the minute branch electrodes and the stem electrode.

In an exemplary embodiment, the linear electrodes of the second electrode may include a plurality of minute branch electrodes, and the second electrode may further include a partial planar electrode connected to the minute branch electrodes.

In an exemplary embodiment, a minute pattern may be defined by the linear electrode in the second electrode, a pitch of the minute pattern may be in a range of about 2.5 micrometers to about 10 micrometers, and a ratio of a width of the linear electrode with respect to a distance of the minute pattern may be in a range of about 0.25 to about 2.

In an exemplary embodiment, an intermediate passivation layer may be formed between the second electrode and the first electrode.

In an exemplary embodiment, the intermediate passivation layer may have a thickness of about 300 nanometers or more.

In an exemplary embodiment, four domains may be defined in each of the first subpixel and the second subpixel by the second electrode thereof.

According to exemplary embodiments of the invention, an aperture ratio is substantially reduced by dividing a pixel into two subpixels and one thin film transistor is disposed therebetween and side visibility is substantially improved by two subpixels having different gamma characteristics.

In such exemplary embodiments, the gamma characteristics of the two subpixels are determined based on structures of the subpixels, and the structures of the subpixels may be efficiently changed during a manufacturing process thereof based on a characteristic of the display device.

### BRIEF DESCRIPTION OF THE DRAWINGS

The above and other features of the invention will become more apparent by describing in further detail exemplary embodiments thereof with reference to the accompanying drawings, in which:
FIG. 1 is a top plan view of pixels of an exemplary embodiment of a liquid crystal display device according to the invention;
FIG. 2 is a cross-sectional view taken along line II-II of FIG. 1;
FIG. 3 is a diagram illustrating a transmission characteristic according to grayscale level for each subpixel in the pixel of an exemplary embodiment of a liquid crystal display according to the invention;
FIG. 4 is a graph of transmittance versus applied potential in the pixel of an exemplary embodiment of a liquid crystal display according to the invention;
FIGS. 5 to 7 are diagrams illustrating characteristics of a pixel of an exemplary embodiment of a liquid crystal display according to the invention;
FIGS. 8 to 11 are diagrams illustrating characteristics of a pixel of an alternative exemplary embodiment of a liquid crystal display according to the invention;
FIGS. 12 to 14 are diagrams illustrating characteristics of a pixel of another alternative exemplary embodiment of a liquid crystal display according to the invention;
FIGS. 15 to 18 are diagrams illustrating characteristics of a pixel of another alternative exemplary embodiment of a liquid crystal display according to the invention;
FIGS. 19 to 20 are cross-sectional views of the pixel of another alternative exemplary embodiment of a liquid crystal display according to the invention; and
FIGS. 21 to 23 are top plan views of exemplary embodiments of a second electrode according to the invention.

### DETAILED DESCRIPTION

The invention will be described more fully hereinafter with reference to the accompanying drawings, in which exemplary embodiments of the invention are shown. This invention may, however, be embodied in many different forms, and should not be construed as limited to the embodiments set forth herein.

Rather, these embodiments are provided so that this disclosure will be thorough and complete, and will fully convey the scope of the invention as defined in the claims to those skilled in the art. Like reference numerals refer to like elements throughout.

It will be understood that when an element or layer is referred to as being "on," "connected to" or "coupled to" another element or layer, the element or layer can be directly on, connected or coupled to the other element or layer or intervening elements or layers may be present. In contrast, when an element is referred to as being "directly on," "directly connected to" or "directly coupled to" another element or layer, there are no intervening elements or layers present. Like numbers refer to like elements throughout. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the invention.

Spatially relative terms, such as "beneath", "below", "lower", "above", "upper" and the like, may be used herein for ease of description to describe one element or feature's relationship to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "includes" and/or "including," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Embodiments of the invention are described herein with reference to cross-section illustrations that are schematic illustrations of idealized embodiments (and intermediate structures) of the invention. As such, variations from the shapes of the illustrations as a result, for example, of manufacturing techniques and/or tolerances, are to be expected. Thus, embodiments of the invention should not be construed as limited to the particular shapes of regions illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the claims set forth herein.

All methods described herein can be performed in a suitable order unless otherwise indicated herein or otherwise clearly contradicted by context. The use of any and all examples, or exemplary language (e.g., "such as"), is intended merely to better illustrate the invention and does not pose a limitation on the scope of the invention unless otherwise claimed. No language in the specification should be construed as indicating any non-claimed element as essential to the practice of the invention as used herein.

Hereinafter, exemplary embodiments of the invention will be described in further detail with reference to the accompanying drawings.

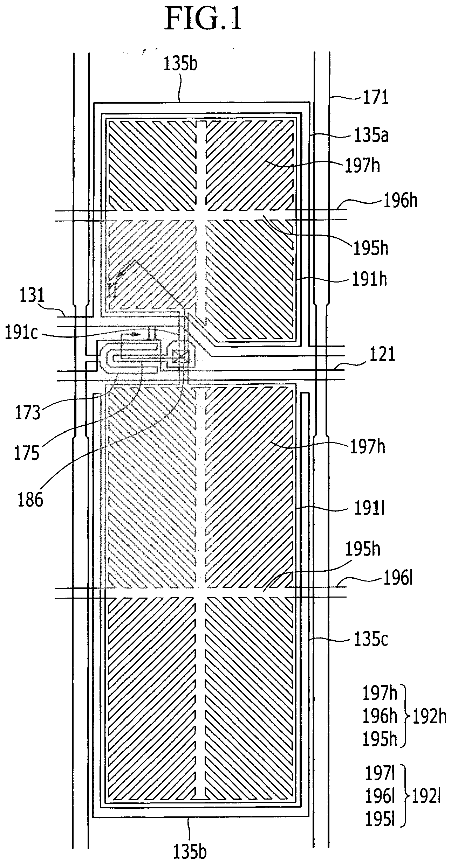

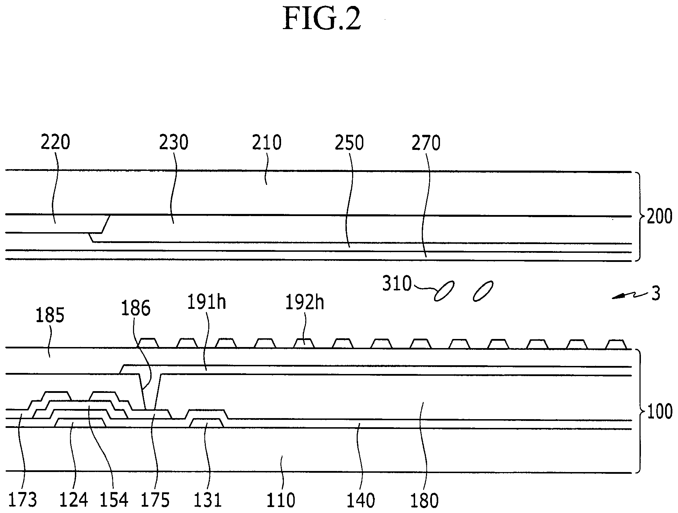

Now, an exemplary embodiment of a liquid crystal display device according to the invention will be described in detail with reference to FIGS. 1 and 2.

FIG. 1 is a top plan view of an exemplary embodiment of a liquid crystal display device according to the invention, and FIG. 2 is a cross-sectional view taken along line II-II of the liquid crystal display device of FIG. 1.

Referring to FIGS. 1 and 2, an exemplary embodiment of the liquid crystal display device includes a lower panel 100, an upper panel 200 disposed opposite to the lower panel 100, a liquid crystal layer 3 interposed between the lower and upper panels 100 and 200, and a pair of polarizers (not illustrated) attached to outer surfaces of the lower and upper panels 100 and 200, respectively.

First, the lower panel 100 will be described.

The lower panel 100 includes a first insulation substrate 110, and a gate line 121 and a storage potential line 131 are disposed on the first insulation substrate 110. The gate line 121 and the storage potential line 131 extend substantially in a first direction, e.g., a horizontal direction. The gate line 121 includes a gate electrode 124. The storage electrode line 131 includes two first vertical storage electrode parts 135a extending upward from an extending direction of the storage electrode line 131, a horizontal storage electrode part 135b connecting the two first vertical storage electrode parts 135a, and two second vertical storage electrode parts 135c extending upward from the horizontal storage electrode part 135b.

The first vertical storage electrode part 135a is disposed along a vertical edge of a first electrode 191h of a first subpixel, and the second vertical storage electrode part 135c is disposed along a vertical edge of a second electrode 1911 of a second subpixel. In an exemplary embodiment, the horizontal storage electrode part 135b is positioned between adjacent horizontal edges of the first electrode 191h of the first subpixel of a corresponding pixel and the front first electrode 191l of a second subpixel electrode of an adjacent upper pixel, and disposed along the adjacent horizontal edges.

In such an embodiment, the first vertical storage electrode part 135a and the horizontal storage electrode part 135b are disposed along the edge of the first electrode 191h of the first subpixel and overlapping at least a portion of the first electrode 191h of the first subpixel, and the second vertical storage electrode part 135c and the horizontal storage electrode part 135b are disposed along the edge of the first electrode 191l of the second subpixel and overlapping at least a portion of the first electrode 191l of the second subpixel.

In such an embodiment, although not shown in FIG. 1, the horizontal storage electrode parts 135b of a pixel are electrically connected to corresponding horizontal storage electrode parts 135b disposed at upper and lower portion of adjacent pixels PX, respectively.

A gate insulating layer 140 is disposed on the gate line 121 and the storage potential line 131. A semiconductor layer 154 is disposed on the gate insulating layer 140. Ohmic contacts (not illustrated) may be disposed on the semiconductors 154.

Data conductors including a plurality of data lines 171 including source electrodes 173 and drain electrodes 175 are disposed on the semiconductor 154 and the gate insulating layer 140.

The gate electrode 124, the source electrode 173 and the drain electrode 175 collectively define a thin film transistor together with the semiconductor 154, and a channel of the thin film transistor is formed in the semiconductor 154 between the source electrode 173 and the drain electrode 175. According to an exemplary embodiment, the ohmic contacts may be disposed between the semiconductor 154 and the source electrode 173, and between the semiconductor 154 and the drain electrode 175, respectively. In such an embodiment, the ohmic contacts substantially improve contact characteristics between the semiconductor 154 and the source electrode 173, and between the semiconductor 154 and the drain electrode 175.

A passivation layer 180 is disposed on the gate insulating layer 140, the data conductors 171, 173 and 175, and an exposed portion of the semiconductor 154. The passivation layer 180 may include an inorganic insulator such as silicon nitride and silicon oxide, for example, or an organic insulator. In an exemplary embodiment, a surface of the passivation layer 180 may be substantially planarized using an organic insulating layer including an organic insulator.

A contact hole 186 that exposes a portion of the drain electrode 175 is defined in the passivation layer 180.

A first electrode 191 including the first electrode 191h of the first subpixel, the first electrode 191l of the second subpixel and a connection portion 191c is disposed on the passivation layer 180.

The first electrode 191h of the first subpixel and the first electrode 191l of the second subpixel are disposed in a first subpixel area and a second subpixel area, respectively. In an exemplary embodiment, at least a side portion of the first electrode 191h of the first subpixel overlaps with the first vertical storage electrode part 135a and the horizontal storage electrode part 135b. In such an embodiment, at least a side portion of the first electrode 1911 of the second subpixel overlaps the second vertical storage electrode part 135c and the horizontal storage electrode part 135b.

The first electrode 191h of the first subpixel and the first electrode 191l of the second subpixel are connected to each other by the connection portion 191c, and the connection portion 191c is electrically connected to the drain electrode 175 through the contact hole 186 in the passivation layer 180. In such an embodiment, the connection portion 191c receives a data potential applied to the drain electrode 175 and transfers the data potential to the first electrode 191h of the first subpixel and the first electrode 191l of the second subpixel.

Each of the first electrode 191h of the first subpixel, the first electrode 191l of the second subpixel and the connection portion 191c includes a transparent conductive material such as indium tin oxide ("ITO") or indium zinc oxide ("IZO"), for example, and may not include an opening therein when viewed from a top view.

An intermediate passivation layer 185 is disposed on the first electrode 191 and the passivation layer 180, and covers the first electrode 191 and the passivation layer 180. The intermediate passivation layer 185 may include an inorganic insulator such as silicon nitride and silicon oxide, for example, or an organic insulator. In an exemplary embodiment, a surface of the intermediate passivation layer may be planarized using an organic insulating layer including an organic insulator.

A second electrode 192 including a minute pattern is disposed on the intermediate passivation layer 185. The second electrode 192 includes a second electrode 192h of the first subpixel disposed in the first subpixel area and a second electrode 192l of the second subpixel disposed in the second subpixel area.

The second electrode 192h of the first subpixel includes a minute branch electrode 197h, a stem electrode 195h and a connection electrode 196h, and overlaps the first electrode 191h of the first subpixel. In such an embodiment, the stem electrode 195h has a cross shape, and the minute branch electrode 197h extends from the stem electrode 195h at an angle of about 45 degrees. The connection electrode 196h of the first subpixel of pixel extends substantially in a horizontal direction of the cross shape of the stem electrode 195h and is connected to the second electrodes 192h of the first subpixel of an adjacent pixel. In an alternative exemplary embodiment, the connection electrode 196h may extend from one of the minute branch electrodes 197h. The second electrodes 192h of the first subpixel receive substantially the same potential through the connection electrode 196h.

The second electrode 192l of the second subpixel includes a minute branch electrode 197l, a stem electrode 195l and a connection electrode 196l, and overlaps the first electrode 191l of the second subpixel. In such an embodiment, the stem electrode 195l has a cross shape, and the minute branch electrode 197l extends from the stem electrode 195l at an angle of about 45 degrees. The connection electrode 196l extends substantially in a horizontal direction from the cross shape of the stem electrode 195l and is connected to the second electrodes 192l of the second subpixel, which are laterally adjacent to each other. According to an exemplary embodiment, the connection electrode 196l may extend from one of the minute branch electrodes 197l. The second electrodes 192l of the second subpixel receive substantially the same potential through the connection electrode 196l, and receive the potential different from the potential applied to the second electrode 192h of the first subpixel. In an exemplary embodiment, one of the second electrode 192h of the first subpixel and the second electrode 192l of the second subpixel may receive a floating potential.

In the first subpixel and the second subpixel, alignment directions of liquid crystal molecules 310 due to an electric field may be controlled by the second electrode 192h of the first subpixel and the second electrode 1921 of the second subpixel, respectively, which may be referred to as domain division units. The domain division units may be an opening pattern defined on the electrodes and may be a protrusion pattern additionally provided on the electrodes.

An area of the second subpixel area may be greater than or equal to an area of the first subpixel area and less than about twice the area of the first subpixel area.

In an exemplary embodiment, the first electrode 191h of the first subpixel and the first electrode 191l of the second subpixel receive substantially the same data potential. In an alternative exemplary embodiment, the potential applied to the second electrode 192h of the first subpixel and the potential applied to the second electrode 192l of the second subpixel may be different from each other. In an exemplary embodiment, one of the potentials applied to the second electrode 192h of the first subpixel and the second electrode 192l of the second subpixel may be a common potential or a storage potential applied to the storage potential line 131. In an alternative exemplary embodiment, one of the potentials applied to the second electrode 192h of the first subpixel and the second electrode 192l of the second subpixel may have various potential levels or may be a floating potential.

A lower alignment layer (not illustrated) is disposed on the second electrode 192. The lower alignment layer may be a vertical alignment layer and may be an alignment layer including a photoreaction material.

Next, the upper panel 200 will be described.

In an exemplary embodiment, the upper panel 200 includes a second insulation substrate 210, and a light blocking member 220 disposed below the second insulation substrate 210. The light blocking member 220 is also referred to as a black matrix and blocks light leakage. The light blocking member 220 extends along the gate line 121 to be expanded upward and downward, and covers a region in which the thin film transistor is positioned, extends along the data line 171, and covers the data line 171 and the periphery of the data line 171. A region which exposed by the light blocking member 220 is defined as a display area which displays an image by emitting light therefrom.

Color filters 230 are disposed in the region which is exposed by the light blocking member 220, and the periphery of the region. The color filter 230 may display one of the primary colors such as three primary colors of red, green and blue, for example. However, the color filter 230 is not limited to the three primary colors of red, green and blue. In one alternative exemplary embodiment, the color filter 230 may display one of cyan, magenta, yellow and white-based colors, for example.

A planarization layer 250, which include an organic material and provide a planarized lower surface, is disposed on the light blocking member 220 and the color filter 230.

A third electrode 270 including a transparent conductive material is disposed on the lower surface of the planarization layer 250. The third electrode 270 may be integrally formed as a single unitary and indivisible unit having a planar shape, and disposed overlapping a plurality of pixels. The common potential may be applied to the third electrode 270.

An upper alignment layer (not illustrated) is disposed below the third electrode 270. The upper alignment layer may be a vertical alignment layer and may be an alignment layer which is photo-aligned using a photopolymerization material.

Polarizers (not illustrated) are provided on outer sides of the lower and upper panels 100 and 200, and transmissive axes of the polarizers on outer sides of the lower and upper panels 100 and 200, respectively, are substantially perpendicular to each other and one of the transmissive axes of the polarizer may be substantially parallel to the gate line 121. In an alternative exemplary embodiment, the polarizer may be disposed only on the outer side of one of the lower and upper panels 100 and 200.

A liquid crystal layer 3 is disposed between the lower and upper panels 100 and 200. The liquid crystal layer 3 includes a plurality of liquid crystal molecules 310, which is substantially vertically aligned with respect to the lower and upper panels 100 and 200 when the electric field is not generated and has negative dielectric anisotropy.

A polymer, which is polymerized by light such as ultraviolet light, may be further included in the liquid crystal layer 3 or the alignment layer (not illustrated). The polymer included in the liquid crystal layer 3 may provide a pretilt angle to the liquid crystal layer 3.

In an exemplary embodiment, the liquid crystal molecules 310 in a subpixel have four domains divided by the second electrode. In such an embodiment, referring again to FIG. 1, in the first subpixel and the second subpixel, the liquid crystal molecules 310 are aligned in a direction forming an angle of about 45 degrees with the gate line 121 or the data line 171, and a region having the liquid crystal molecules 310 aligned in the same direction defines a domain. In such an embodiment, the liquid crystal molecules 310 in each of the four regions divided by the stem electrode 195 are aligned in the same direction and thereby define a domain in the subpixel area.

The liquid crystal display device may further include a spacer (not illustrated) for maintaining a cell gap between the lower and upper panels 100 and 200. In an exemplary embodiment, the spacer may be attached to the upper panel 200 or the lower panel 100.

The alignment direction of the liquid crystal molecules 310 is changed by an electric field generated by the first electrode 191h of the first subpixel and the first electrode 191l of the second subpixel, to which the data potentials are applied, the third electrode 270, to which the common potential is applied, and the second electrode 192h of the first subpixel and the second electrode 192l of the second subpixel, to which different potentials are applied. In such an embodiment, the liquid crystal molecules 310 of the liquid crystal layer 3, which are aligned substantially vertical to the lower and upper panels 100 and 200 when the electric field is not applied, are tilted substantially in a horizontal direction by the electric field, and luminance of light passing through the liquid crystal display device varies based on the tilted degree of the liquid crystal molecules.

The electric filed in the first subpixel is generated by the first electrode 191h of the first subpixel, the third electrode 270 and second electrode 192h of the first subpixel, and the electric field in the second subpixel is generated by the first electrode 1911 of the second subpixel, the third electrode 270 and the second electrode 1921 of the second subpixel. In an exemplary embodiment, the third electrode 270 and two lower electrodes (e.g., the first electrode 191h of the first subpixel and second electrode 192h of the first subpixel) are disposed in the first subpixel, such that a liquid crystal capacitor formed by the third electrode 270 and the first electrode 191h of the first subpixel, and a liquid crystal capacitor formed by the third electrode 270 and the second electrode 192h of the first subpixel are included in the first subpixel. In such an embodiment, a change in transmittance based on a rotation of the vertically aligned liquid crystal molecules 310 are not substantially affected by the electric field generated between the two lower electrodes (e.g., the first electrode 191h of the first subpixel and second electrode 192h of the first subpixel) which is a horizontal electric field.

Accordingly, in such an embodiment, although the third electrode 270 and two lower electrodes (e.g., the first electrode 1911 of the second subpixel and the second electrode 192l of the second subpixel) are disposed in the second subpixel, only a liquid crystal capacitor formed by the third electrode 270 and the first electrode 191l of the second subpixel and a liquid crystal capacitor formed by the third electrode 270 and the second electrode 192l of the second subpixel effectively operate in the subpixel.

In such an embodiment, as the first electrode 191h of the first subpixel and the first electrode 191l of the second subpixel receive substantially the same data potential and the third electrode 270 receives the common potential, a difference in the electric field between the first subpixel and the second subpixel is provided based on the second electrode 192h of the first subpixel and the second electrode 192l of the second subpixel, to which different potentials are applied. In such an embodiment, the liquid crystal capacitor formed by the third electrode 270 of the first subpixel and the first electrode 191h of the first subpixel, and the liquid crystal capacitor formed by the third electrode 270 of the second subpixel and the first electrode 191l of the second subpixel have substantially the same characteristic. However, the characteristics of the first and second subpixels are changed by the liquid crystal capacitor formed by the third electrode 270 of the first subpixel and the second electrode 192h of the first subpixel, and the liquid crystal capacitor formed by the third electrode 270 of the second subpixel and the second electrode 192l of the second subpixel.

Referring back to FIG. 1, in an exemplary embodiment, a single thin film transistor is disposed in the pixel to provide the date potential to the first and second subpixels thereof. In such an embodiment, the gate line 121, the storage potential line 131 and the single thin film transistor are disposed between the first and second subpixels, and a width between the first and second subpixels is substantially reduced, compared to a conventional display device including two subpixels, where two or more thin film transistors are typically disposed between the two subpixels. In an exemplary embodiment, the data potential is applied to the two subpixels through a single thin film transistor, and a width of the corresponding region (hereinafter, referred to as a thin film transistor formation region), which is typically covered by the black matrix, is relatively small such that an aperture ratio is substantially increased.

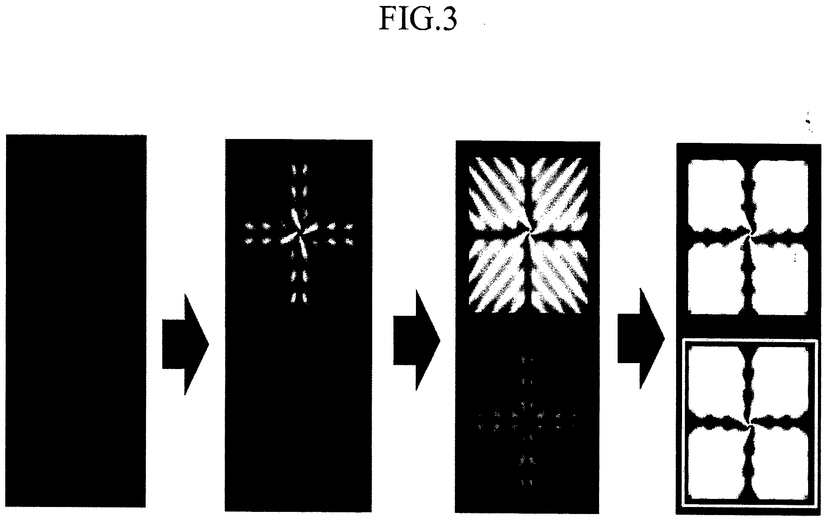

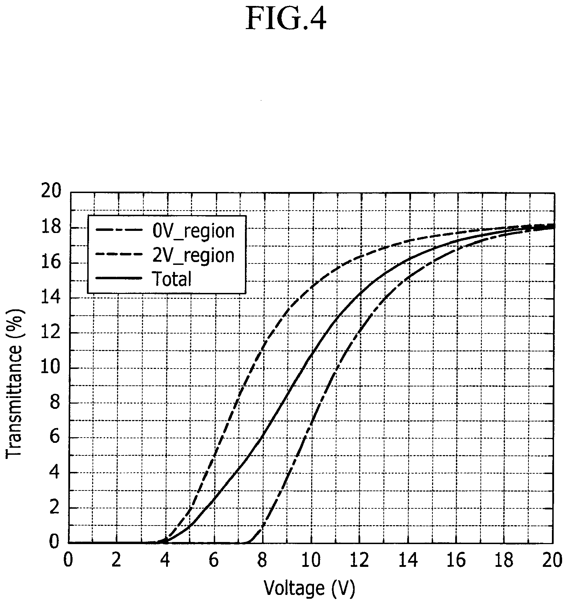

A difference in transmittance between the first subpixel and the second subpixel will be described with reference to FIGS. 3 and 4.

FIG. 3 is a diagram illustrating a transmission characteristic according to grayscale level for each subpixel in a pixel of an exemplary embodiment of a liquid crystal display according the invention, and FIG. 4 is a graph of transmittance according to a potential applied to a pixel of an exemplary embodiment of a liquid crystal display according to the invention.

FIG. 3 shows transmittance change of the pixel shown in FIG. 1 when the potential applied to the pixel is changed, e.g., gradually increased. However, since the different potentials are applied to the second electrode 192h of the first subpixel and the second electrode 192l of the second subpixel, the transmittance of the first subpixel and the transmittance of the second subpixel have a large difference in a medium gray. In FIGS. 3 and 4, a potential of about 2 volts (V) is applied to the second electrode 192h of the first subpixel, and a potential of about zero (0) V is applied to the second electrode 1921 of the second subpixel.

FIG. 4 shows a graph of transmittance according to a potential.

As shown in the graph of FIG. 4, in a low potential (low grayscale level) and a high potential (high grayscale level), a difference in transmittance between the first subpixel and the second subpixel is small, but the difference in transmittance is large in a medium potential (medium grayscale level).

As illustrated in FIG. 4, visibility at the side is improved due to the different gamma characteristics in the first and second subpixels.

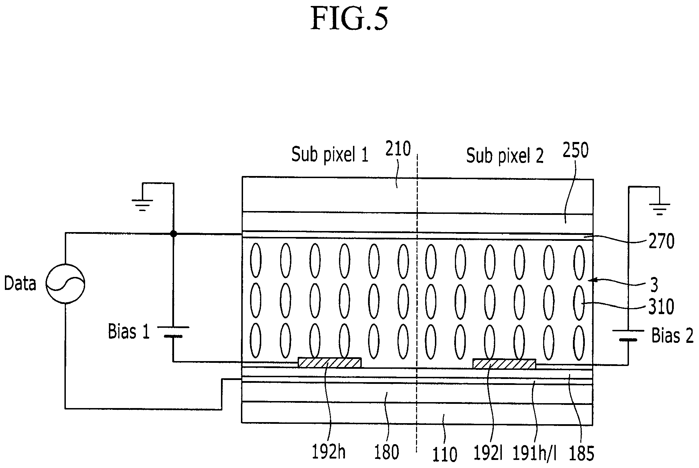

Hereinafter, a structure and a characteristic of the pixel of an exemplary embodiment of the display device will be described with reference to FIGS. 5 to 7 and with reference again to FIGS. 1 and 2.

FIGS. 5 to 7 are diagrams illustrating characteristics of the pixel of an exemplary embodiment of a display device according to the invention.

FIG. 5 is a diagram schematically illustrating a portion of a cross-sectional structure of the pixel of an exemplary embodiment of a display device according to the invention.

In FIG. 5, two subpixels (e.g., the first subpixel Sub pixel 1 and the second subpixel Sub pixel 2) included in a pixel are shown as being laterally connected to each other, for convenience of illustration, but in an exemplary embodiment, the two subpixels may not be laterally connected to each other.

The two subpixels include first electrodes 191h/l disposed on the first insulation substrate 110, second electrodes 192h and 192l disposed overlapping the first electrode 191 thereon and separated from each other at a distance, and third electrodes 270 disposed on the second insulation substrate 210, respectively.

In an exemplary embodiment, the second electrodes 192h and 192l of the two subpixels are electrically disconnected from each other, have minute linear structures, and are separated apart from each other at a distance. In such an embodiment, the first electrode 191h/l and the third electrode 270 have a planar shape and may be electrically or physically connected to each other. According to an exemplary embodiment, the first electrodes 191 or the third electrodes 270 of the adjacent pixels may be electrically or physically connected to each other. In an exemplary embodiment, as shown in FIGS. 1 and 2 correspond to each other, the third electrodes 270 in adjacent pixels are connected to each other, but the first electrodes 191 of the adjacent pixels are separated from each other.

In an exemplary embodiment, where the first electrode 191 and the second electrode 192 overlap each other, but electrically insulated from each other, an intermediate passivation layer 185 is disposed between the first electrode 191 and the second electrode 192.

The liquid crystal layer 3 including the liquid crystal molecules 310, which are substantially vertically aligned when the electric field is not generated in the liquid crystal layer 3, is disposed between the second electrode 192 and the third electrode 270.

In an exemplary embodiment, constituent elements other than the constituent elements described above and not illustrated in FIG. 5 may be further included. In an exemplary embodiment, the passivation layer 180 on the first insulation substrate 110 and the planarization layer 250 on the second insulation substrate 210 may be omitted.

Hereinafter, potential application in an exemplary embodiment of the display device will be described in greater detail.

In an exemplary embodiment, a data potential is applied to the first electrode 191h of the first subpixel Sub pixel 1, a first bias potential Bias 1 is applied to the second electrode 192h of the first subpixel Sub pixel 1, and a common potential is applied to the third electrode 270 of the first subpixel Sub pixel 1. In FIG. 5, the data potential is illustrated as Data, and an alternative current potential ("AC") potential mark next to the data potential indicates that a polarity of the data potential is repetitively reversed.

In an exemplary embodiment, the data potential is applied to the first electrode 1911 of the second subpixel Sub pixel 2, which is connected to the first electrode 191h of the first subpixel Sub pixel 1, a second bias potential Bias 2 is applied to the second electrode 192l of the second subpixel Sub pixel 2, and a common potential is applied to the third electrode 270 of the second subpixel Sub pixel 2, which is connected to the third electrode 270 of the first subpixel Sub pixel 1.

In an exemplary embodiment, as shown in FIG. 5, the second electrodes 192h and 192l of the first subpixel Sub pixel 1 and the second subpixel Sub pixel 2 have the linear structure and the minute linear patterns spaced apart from each other at a distance, but the linear structure or the structure having the minute linear patterns of the second electrode 192h or 192l is not limited thereto. The linear structure or the structure having the minute linear patterns of the second electrode 192h or 192l in an alternative exemplary embodiment will be described later in detail.

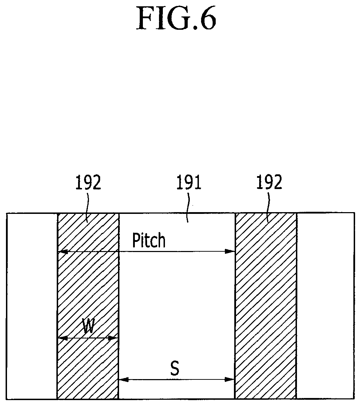

FIG. 6 is a top plan view schematically showing a structure of an exemplary embodiment of a second electrode 192.

In an exemplary embodiment, as shown in FIG. 6, the second electrode 192 includes a minute pattern defined by a plurality of linear electrodes which are repetitively arranged therein, and a pitch between adjacent linear electrodes, a width W of the linear electrode, and a distance S between the adjacent linear electrodes are defined.

In such an embodiment, the first bias potential Bias 1 is applied to the second electrode 192h of the first subpixel Sub pixel 1 and the second bias potential bias 2 is applied to the second electrode 192l of the second subpixel Sub pixel 2, such that gamma characteristics of two subpixels are different from each other.

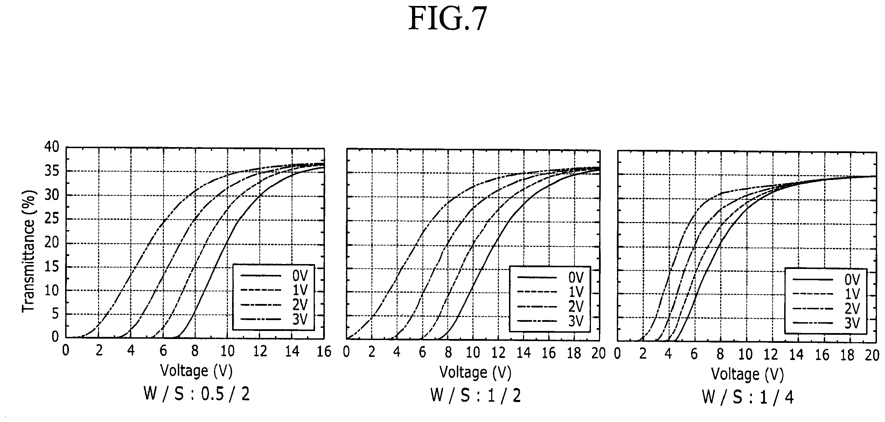

In such an embodiment, the gamma characteristic may be determined based on characteristics of the second electrode 192, such as the pitch, the width and the distance of the second electrode 192, which will now be described with reference to FIG. 7.

FIG. 7 illustrates a graph of transmittance versus potential in various exemplary embodiments of the second electrode 192.

The first graph of FIG. 7 relates to an exemplary embodiment in which a width W of a linear electrode of the second electrode 192 is about 0.5 micrometer (µm), a distance S between adjacent linear electrodes of the second electrode 192 is about 2 µm, and a pitch between the adjacent linear electrode of the second electrode 192 is about 2.5 µm. The second graph of FIG. 7 relates to an exemplary embodiment in which a width W of the linear electrode of the second electrode 192 is about 1 µm, a distance S between the adjacent linear electrode of the second electrode 192 is about 2 µm, and a pitch between the adjacent linear electrode of the second electrode 192 is about 3 µm. The third graph of FIG. 7 relates to an exemplary embodiment in which a width W of the linear electrode of the second electrode 192 is about 1 µm, a distance S between the adjacent linear electrode of the second electrode 192 is about 2 µm, and a pitch between the adjacent linear electrode of the second electrode 192 is about 4 µm.

In FIG. 7, four curves are illustrated in each graph, and represent cases where four different potentials are applied to the second electrode 192 as the first or second bias potential.

According to FIG. 7, as the applied potential is decreased, the potential-transmittance ("V-T") curves are more rapidly increased.

In an exemplary embodiment, gamma characteristic difference between the first subpixel and the second subpixel may be greater than a predetermined level, for example, the difference may be about 0.5 V or more. In such an embodiment, where the difference in potential when the first subpixel and the second subpixel display the same transmittance is about 0.5 V or more, side visibility is substantially improved.

In an exemplary embodiment, the pitch, the width, and the distance of the adjacent linear electrodes of the second electrode 192 are determined, and further, the first and second bias potentials Bias 1 and Bias 2 to be applied to the second electrode 192h of the first subpixel and the second electrode 192l of the second subpixel may be determined, based on the graphs of FIG. 7.

In an exemplary embodiment of the invention, the pitch of the second electrode 192 may be in a range of about 2.5 µm to about 10 µm, and a ratio of width W with respect to a distance S W/S may be in a range of about 0.25 to about 2. In such an embodiment, the first and second bias potentials may be determined to allow the difference in potential when the first subpixel and the second subpixel display the same transmittance to be about 0.5 V or more.

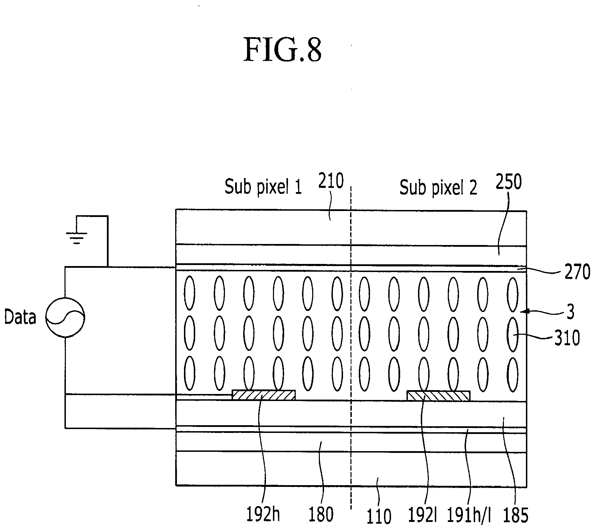

Hereinafter, an alternative exemplary embodiment of the invention will be described with reference to FIGS. 8 to 11.

FIGS. 8 to 11 are diagrams illustrating characteristics of the pixel of an alternative exemplary embodiment of a display device according to the invention.

FIG. 8 is a diagram schematically illustrating a portion of a cross-sectional structure of the pixel of an exemplary embodiment of a display device according to the invention.

In FIG. 8, two subpixels (e.g., the first subpixel Sub pixel 1 and the second subpixel Sub pixel 2) in a pixel are shown as being laterally connected to each other, for convenience of illustration, but the two pixels may not be connected to each other in an exemplary embodiment.

The two subpixels include first electrodes 191 disposed on the first insulation substrate 110, second electrodes 192 disposed opposite to the first electrode 191 thereon and spaced apart from each other at a distance, and third electrodes 270 disposed on the second insulation substrate 210.

The second electrodes 192 in the two subpixels are electrically disconnected from each other, have linear structures, and are separated from each other at a distance. In an exemplary embodiment, the first electrode 191 and the third electrode 270 have a planar shape and may be electrically or physically connected to each other. According to an exemplary embodiment, the first electrodes 191 or the third electrodes 270 of the adjacent pixels may be electrically or physically connected to each other. In an exemplary embodiment, the third electrodes 270 of the adjacent pixels are connected to each other, and the first electrodes 191 of the adjacent pixels are spaced apart from each other.

In an exemplary embodiment, where the first electrode 191 and the second electrode 192 overlaps each other, and electrically insulated from each other, an intermediate passivation layer 185 is disposed between the first electrode 191 and the second electrode 192.

The liquid crystal layer 3 including the liquid crystal molecules 310, which are substantially vertically aligned when the electric field is not generated in the liquid crystal layer 3, is disposed between the second electrode 192 and the third electrode 270.

In an exemplary embodiment, constituent elements other than the constituent elements described above and shown in FIG. 8 may be further included. In an exemplary embodiment, the passivation layer 180 on the first insulation substrate 110 and the planarization layer 250 on the second insulation substrate 210 may be omitted.

Hereinafter, potential application in an exemplary embodiment of the display device will be described in greater detail.

In an exemplary embodiment, data potentials are applied to the first electrode 191h and the second electrode 192h of the first subpixel Sub pixel 1, and a common potential is applied to the third electrode 270 of the first subpixel Sub pixel 1. In FIG. 8, the data potential is illustrated as Data, and an AC mark next to the data potential indicates that a polarity of the data potential is repetitively reversed.

In an exemplary embodiment, the data potential is applied to the first electrode 191l of the second subpixel Sub pixel 2, which is connected to the first electrode 191h of the first subpixel Sub pixel 1, but the second electrode 192l of the second subpixel Sub pixel 2, to which the potential is not applied from the outside, is floated, and a common potential is applied to the third electrode 270 of the second subpixel Sub pixel 2, which is connected to the third electrode 270 of the first subpixel Sub pixel 1.

In FIG. 8, the second electrodes 192 have the linear structures and the minute linear patterns spaced apart from each other at a distance, but the linear structure or the structure having the minute linear patterns of the second electrode 192 is not limited thereto. The linear structure or the structure having the minute linear patterns of the second electrode 192h or 192l in an alternative exemplary embodiment will be described later in detail.

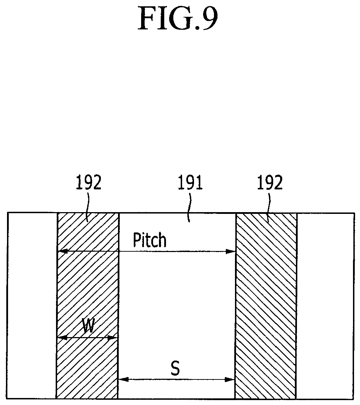

FIG. 9 is a top plan view schematically showing a structure of an exemplary embodiment of a second electrode 192 .

In an exemplary embodiment, as shown in FIG. 9, the second electrodes 192 are includes a minute pattern defined by a plurality of linear electrodes which are repetitively arranged therein, and a pitch between the adjacent linear electrodes, a width W of the linear electrode, and a distance S between the adjacent linear electrodes are defined.

In such an embodiment, the data potential is applied to the second electrode 192h of the first subpixel Sub pixel 1 and the second electrode 192l of the second subpixel Sub pixel 2 is floated such that the gamma characteristics of the two subpixels are different from each other.

In such an embodiment, the gamma characteristic may be determined based on characteristics of the second electrode 192, such as the pitch, the width, and the distance of the second electrode 192, which will now be described with reference to 10 and 11.

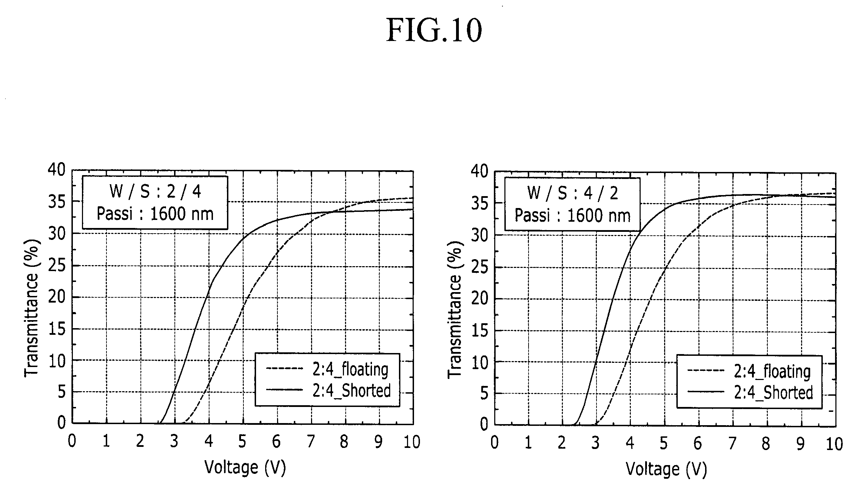

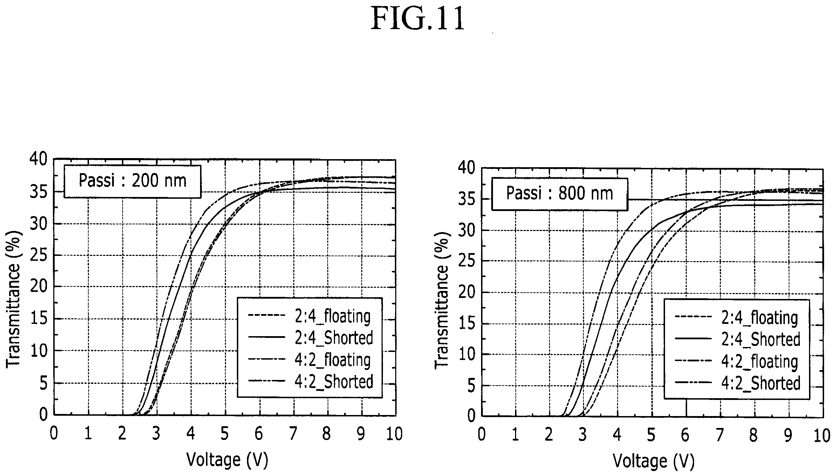

FIGS. 10 and 11 illustrate graphs of transmittance versus potential in various exemplary embodiments of the second electrode 192.

The first graph of FIG. 10 relates to an exemplary embodiment in which a width W of a linear electrode of the second electrode 192 is about 2 µm, a distance S between adjacent linear electrodes of the second electrode 192 is about 4 µm, and a pitch between adjacent linear electrodes of the second electrode 192 is about 6 µm. The second graph of FIG. 10 relates to an exemplary embodiment in which a width W of a linear electrode of the second electrode 192 is about 4 µm, a distance S between adjacent linear electrodes of the second electrode 192 is about 2 µm, and a pitch between adjacent linear electrodes of the second electrode 192 is about 6 µm.

In FIG. 10, the pitches of the exemplary embodiments are substantially the same as each other, and ratios of the width W with respect to the distance S of the exemplary embodiments are different from each other.

Further, in FIG. 10, "shorted" means that the data potential is applied to the first subpixel like the first subpixel Sub pixel 1 of FIG. 8, and "floating" means that the second subpixel is floated like the second subpixel Sub pixel 2 of FIG. 8.

Further, in FIG. 10, a thickness of the intermediate passivation layer 185 (Passi) in the exemplary embodiments is about 1,600 nanometers (nm).

As shown in the graphs of FIG. 10, as the ratio of width W respect to distance S of the linear electrodes of the second pixel 192 is changed, the V-T characteristic is changed. In such embodiments, as shown in FIG. 10, a potential difference when the first subpixel and the second subpixel display the same transmittance in the medium grayscale level is about 0.5 V or more, such that side visibility is substantially improved.

In such an embodiment, the pitch between the adjacent linear electrode of the second electrode 192 may have a value in a range of about 2.5 µm to about 10 µm, and a value of width W respect to distance S may have a value in a range of about 0.25 to about 2.

FIG. 11 illustrates a change in V-T characteristic according to a thickness of the intermediate passivation layer 185.

In the first graph of FIG. 11, the thickness of the intermediate passivation layer 185 is about 200 nm, and in the second graph of FIG. 11, the thickness of the intermediate passivation layer 185 is about 800 nm. Further, in the first graph and the second graph of FIG. 11, V-T characteristics of an exemplary embodiment where a ratio of width W with respect to distance S is about 2:4 and an exemplary embodiment where the ratio is about 4:2 in the exemplary embodiment of FIG. 8 are shown.

Referring to FIG. 11, in an exemplary embodiment where the thickness of the intermediate passivation layer 185 is relative small, the potential difference between the first subpixel and the second subpixel in the medium grayscale level is less than about 0.5 V, such that side visibility may not be effectively improved. In an exemplary embodiment, the intermediate passivation layer 185 may have a thickness of about 300 nm or more such that the side visibility is substantially improved.

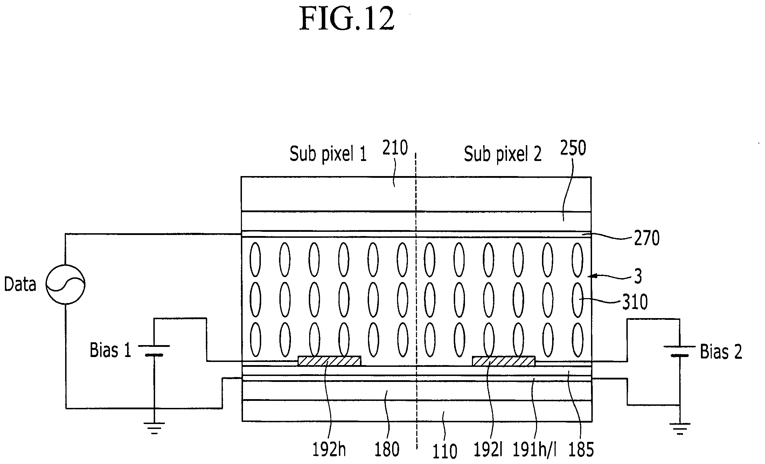

Hereinafter, another alternative exemplary embodiment of the invention will be described with reference to FIGS. 12 to 14.

FIGS. 12 to 14 are diagrams illustrating characteristics of the pixel of another alternative exemplary embodiment of a display device according to the invention.

FIG. 12 is a diagram schematically illustrating a portion of a cross-sectional structure of the pixel of an exemplary embodiment of a display device according to the invention.

In FIG. 12, two subpixels (the first subpixel Sub pixel 1 and the second subpixel Sub pixel 2) of a pixel are shown as being laterally connected to each other, for convenience of illustration, but in an exemplary embodiment, the two subpixels may not be connected to each other.

The two subpixels include first electrodes 191 on the first insulation substrate 110, second electrodes 192 opposite to the first electrode 191 thereon and spaced apart from each other at a distance, and third electrodes 270 on the second insulation substrate 210.

The second electrodes 192 in the two subpixels are electrically disconnected from each other, have linear structures and minute linear patterns that are spaced apart from each other at a distance. In an exemplary embodiment, the first electrode 191 and the third electrode 270 have a planar shape and may be electrically or physically connected to each other. According to an exemplary embodiment, the first electrodes 191 or the third electrodes 270 of the adjacent pixels may be electrically or physically connected to each other. In an exemplary embodiment, as shown in FIG. 12, the first electrodes 191 of the adjacent pixels are connected to each other, but the third electrodes 270 of the adjacent pixels are spaced apart from each other.

In an exemplary embodiment, where the first electrode 191 and the second electrode 192 overlap each other, but electrically insulated from each other, an intermediate passivation layer 185 is disposed between the first electrode 191 and the second electrode 192.

The liquid crystal layer 3 including the liquid crystal molecules 310, which are substantially vertically aligned when the electric field is not generated therein, is disposed between the second electrode 192 and the third electrode 270.

In an exemplary embodiment, constituent elements other than the constituent elements described above and shown in FIG. 12 may be further included. In an exemplary embodiment, the passivation layer 180 on the first insulation substrate 110 and the planarization layer 250 on the second insulation substrate 210 may be omitted.

Hereinafter, potential application in an exemplary embodiment of the display device will be described in greater detail.

In an exemplary embodiment, a common potential is applied to the first electrode 191h of the first subpixel, a first bias potential Bias 1 is applied to the second electrode 192h, and a data potential is applied to the third electrode 270. In FIG. 12, the data potential is illustrated as Data, and an AC mark next to the data potential indicates that a polarity of the data potential is repetitively reversed.

In an exemplary embodiment, the common potential is applied to the first electrode 191l of the second subpixel Sub pixel 2, which is connected to the first electrode 191h of the first subpixel Sub pixel 1, the second bias potential Bias 2 is applied to the second electrode 192l of the second subpixel Sub pixel 2, and the data potential is applied to the third electrode 270 of the second subpixel Sub pixel 2, which is connected to the third electrode 270 of the first subpixel Sub pixel 1.

In FIG. 12, the second electrodes 192 have the linear structures and the minute linear patterns separated from each other at a distance, but not being limited thereto. The linear structure or the structure having the minute linear patterns of the second electrode 192h or 192l in an alternative exemplary embodiment will be described later in detail.

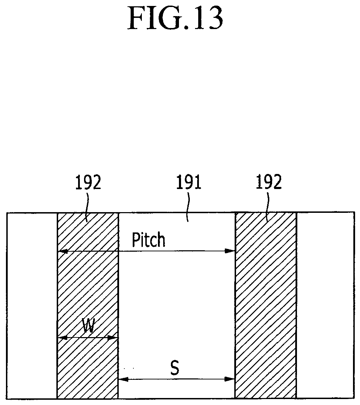

FIG. 13 is a top plan view schematically showing a structure of an exemplary embodiment of a second electrode 192.

In an exemplary embodiment, as shown in FIG. 13, the second electrodes 192 includes a minute pattern defined by a plurality of linear electrodes which are repetitively arranged therein, and a pitch between the adjacent linear electrodes, a width W of the linear electrodes, and a distance S between the adjacent linear electrodes are defined.

In such an embodiment, the first bias potential Bias 1 is applied to the second electrode 192h of the first subpixel Sub pixel 1 and the second bias potential Bias 2 is applied to the second electrode 192l of the second subpixel Sub pixel 2, such that gamma characteristics of the two subpixels are different from each other.

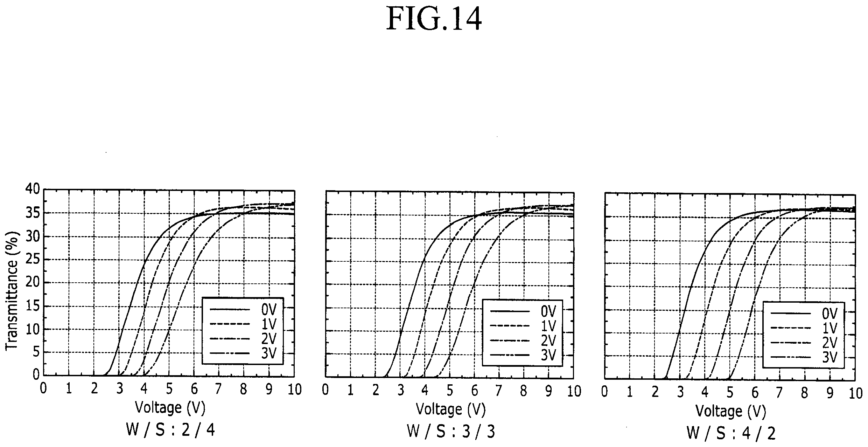

In such an embodiment, the gamma characteristic may be determined based on characteristics of the second electrode 192, such as the pitch, the width and the distance of the second electrode 192, which will now be described with reference to FIG. 14.

FIG. 14 illustrates a graph of transmittance versus potential in various exemplary embodiment of the second electrode 192.

The first graph of FIG. 14 relates to an exemplary embodiment in which a width W of a linear electrode of the second electrode 192 is about 2 µm, a distance S between adjacent linear electrodes of the second electrode 192 is about 4 µm, and a pitch between adjacent linear electrodes of the second electrode 192 is about 6 µm. The second graph of FIG. 14 relates to an exemplary embodiment in which a width W of a linear electrode of the second electrode 192 is about 3 µm, a distance S between adjacent linear electrodes of the second electrode 192 is about 3 µm, and a pitch between adjacent linear electrodes of the second electrode 192 is about 6 µm. The third graph of FIG. 14 relates to an exemplary embodiment in which a width W of a linear electrode of the second electrode 192 is about 4 µm, a distance S between adjacent linear electrodes of the second electrode 192 is about 2 µm, and a pitch between adjacent linear electrodes of the second electrode 192 is about 6 µm.

In FIG. 14, four curves are illustrated in each graph, and represent cases where four different potentials are applied to the second electrode 192.

According to FIG. 14, as the applied potential is decreased, the V-T curves are more rapidly increased.

In an exemplary embodiment, gamma characteristic difference between the first subpixel and the second subpixel may be greater than a predetermined level, for example, the difference may be about 0.5 V or more. In such an embodiment, where the difference in potential when the first subpixel and the second subpixel display the same transmittance is about 0.5 V or more, side visibility is substantially improved.

In an exemplary embodiment, the pitch, the width and the distance of the second electrode 192 are determined, and further, the first and second bias potentials Bias 1 and Bias 2 to be applied to the second electrode 192h of the first subpixel and the second electrode 192l of the second subpixel may be determined, based on the graphs of FIG. 14.

In an exemplary embodiment, the pitch of the second electrode 192 may have a value in a range of about 2.5 µm to about 10 µm, and a value of width W with respect to distance S may have a value in a range of about 0.25 to about 2. In such an embodiment, the first and second bias potentials may be determined to allow the potential difference when the first subpixel and the second subpixel display the same transmittance to be about 0.5 V or more.

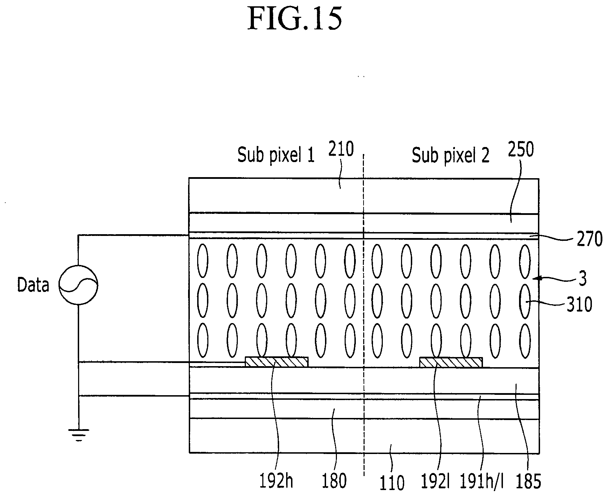

Hereinafter, yet another exemplary embodiment of the invention will be described with reference to FIGS. 15 to 18.

FIGS. 15 to 18 are diagrams illustrating characteristics of the pixel of an exemplary embodiment of a display device according to an exemplary embodiment of the invention.

First, this will be described in FIG. 15.

FIG. 15 is a diagram schematically illustrating a portion of a cross-sectional structure of the pixel of an exemplary embodiment of a display device according to the invention.

In FIG. 15, two subpixels (e.g., the first subpixel Sub pixel 1 and the second subpixel Sub pixel 2) in a pixel are shown as being laterally connected to each other, for convenience of illustration, but the two pixels may not be connected to each other in an exemplary embodiment.

The two subpixels include first electrodes 191 on the first insulation substrate 110, second electrodes 192 opposite to the first electrode 191 thereon and spaced apart from each other at a distance, and third electrodes 270 on the second insulation substrate 210.

The second electrodes 192 in the two subpixels are electrically disconnected from each other, have linear structures and minute linear patterns which are spaced apart from each other at a distance. In an exemplary embodiment, the first electrode 191 and the third electrode 270 have a planar shape and may be electrically or physically connected to each other. According to an exemplary embodiment, the first electrodes 191 or the third electrodes 270 of the adjacent pixels may be electrically or physically connected to each other. In an exemplary embodiment, as shown in FIG. 15, the first electrodes 191 of the adjacent pixels are connected to each, but the third electrodes 270 of the adjacent pixels are spaced apart from each other.

In an exemplary embodiment, where the first electrode 191 and the second electrode 192 overlap with each other, but electrically insulated from each other, an intermediate passivation layer 185 is disposed between the first electrode 191 and the second electrode 192.

The liquid crystal layer 3 including the liquid crystal molecules 310, which are substantially vertically aligned when the electric field is not generated therein, is disposed between the second electrode 192 and the third electrode 270.

In an exemplary embodiment, constituent elements other than the constituent elements described above and shown in FIG. 15 may be further included. In an exemplary embodiment, the passivation layer 180 on the first insulation substrate 110 and the planarization layer 250 on the second insulation substrate 210 may be omitted.

Hereinafter, potential application in an exemplary embodiment of the display device will be described in greater detail.

In an exemplary embodiment, common potentials are applied to the first electrode 191h and the second electrode 192h of the first subpixel Sub pixel 1, and a data potential is applied to the third electrode 270 of the first subpixel Sub pixel 1. In FIG. 15, the data potential is illustrated as Data, and an AC mark next to the data potential indicate that a polarity of the data potential is repetitively reversed.

In an exemplary embodiment, the common potential is applied to the first electrode 191l of the second subpixel Sub pixel 2, which is connected to the first electrode 191h of the first subpixel Sub pixel 1, but the second electrode 192l of the second subpixel Sub pixel 2, to which the potential is not applied from the outside, is floated, and the data potential is applied to the third electrode 270 of the second subpixel Sub pixel 2, which is connected to the third electrode 270 of the first subpixel Sub pixel 1.

In an exemplary embodiment, as shown in FIG. 15, the second electrodes 192h and 192l of the first subpixel Sub Pixel 1 and the second subpixel Sub Pixel 2 have the linear structure and the minute linear patterns spaced apart from each other at a distance, but the linear structure or the structure having the minute linear patterns of the second electrode 192h or 192l is not limited thereto. The linear structure or the structure having the minute linear patterns of the second electrode 192h or 192l in an alternative exemplary embodiment will be described later in detail.

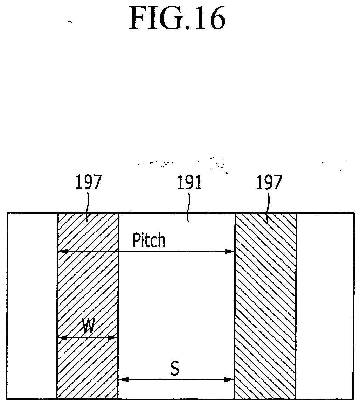

FIG. 16 is a top plan view schematically showing a structure of a second electrode 192 of an exemplary embodiment.

In an exemplary embodiment, as shown in FIG. 16, the second electrodes 192 includes a minute pattern defined by a plurality of linear electrodes which are repetitively arranged therein, and a pitch between the adjacent linear electrodes, a width W of the linear electrode, and a distance S between the linear electrodes are defined.

In such an embodiment, the first bias potential Bias 1 is applied to the second electrode 192h of the first subpixel Sub pixel 1, and the second electrode 1921 of the second subpixel Sub pixel 2 is floated, such that the gamma characteristics of the two subpixels are different from each other.

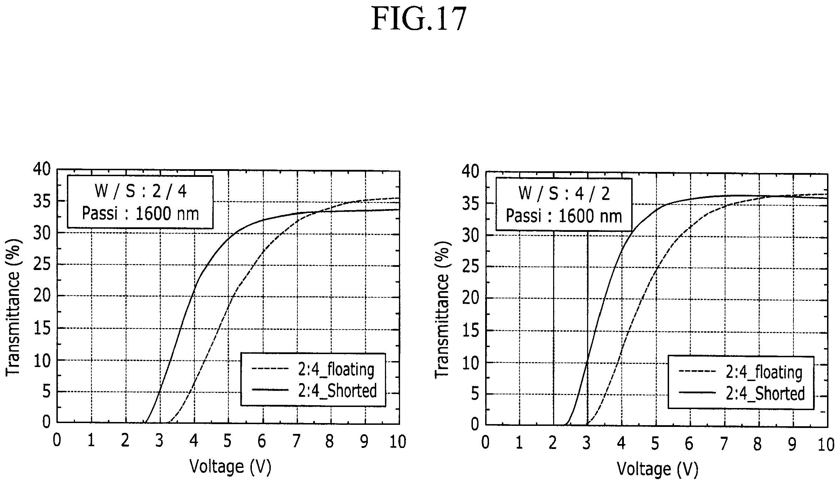

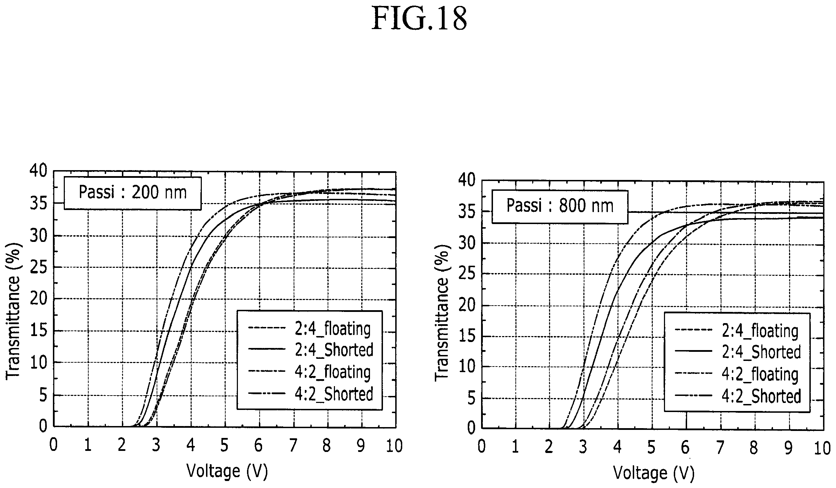

In such an embodiment, the gamma characteristic may be determined based on characteristics of the second electrode 192, such as the pitch, the width and the distance of the second electrode 192, which will now be described with reference to FIGS. 17 and 18.

FIGS. 17 and 18 illustrate graphs of transmittance versus potential in various exemplary embodiment of the second electrode 192.

The first graph of FIG. 17 relates to an exemplary embodiment in which a width W of a linear electrode of the second electrode 192 is about 2 µm, a distance S between adjacent linear electrodes of the second electrode 192 is about 4 µm, and a pitch between adjacent linear electrodes of the second electrode 192 is about 6 µm. The second graph of FIG. 17 relates to an exemplary embodiment in which a width W of a linear electrode of the second electrode 192 is about 4 µm, a distance S between adjacent linear electrodes of the second electrode 192 is about 2 µm, and a pitch between adjacent linear electrodes of the second electrode 192 is about 6 µm.

In FIG. 17, the pitches of the exemplary embodiments are substantially the same as each other, and ratios of the width W with respect to the distance S of the exemplary embodiments are different from each other.

Further, in FIG. 17, shorted means that the common potential is applied to the first subpixel like the first subpixel Sub pixel 1 of FIG. 15, and floating means that the second subpixel is floated like the second subpixel Sub pixel 2 of FIG. 15.

Further, in FIG. 17, a thickness of the intermediate passivation layer 185 in the exemplary embodiments is about 1,600 nm.

As shown in the graphs of FIG. 17, as the ratio of width W with respect to distance S of the second pixel 192 is changed, the V-T characteristic is changed. In such an embodiment, as shown in FIG. 17, a potential difference when the first subpixel and the second subpixel display the same transmittance in the medium grayscale level is about 0.5 V or more, such that side visibility is substantially improved.

In such an embodiment, the pitch between the adjacent linear electrode of the second electrode 192 may have a value in a range of about 2.5 µm to about 10 µm, and a value of width W respect to distance S may have a value in a range of about 0.25 to about 2.

FIG. 18 illustrates a change in V-T characteristic according to a thickness of the intermediate passivation layer 185.

In the first graph of FIG. 18, the thickness of the intermediate passivation layer 185 is about 200 nm, and in the second graph of FIG. 18, the thickness of the intermediate passivation layer 185 is about 800 nm. Further, in the first graph and the second graph of FIG. 18, both the case where a ratio of width W with respect to distance S is about 2:4 and the case where the ratio is about 4:2 in the exemplary embodiment of FIG. 8 are experimented.

Referring to FIG. 18, in an exemplary embodiment where the thickness of the intermediate passivation layer 185 is small, the potential difference between the first subpixel and the second subpixel in the medium grayscale level is less than about 0.5 V such that side visibility may not be effectively improved. In an exemplary embodiment, the intermediate passivation layer 185 may have a thickness of about 300 nm or more such that the side visibility is substantially improved.

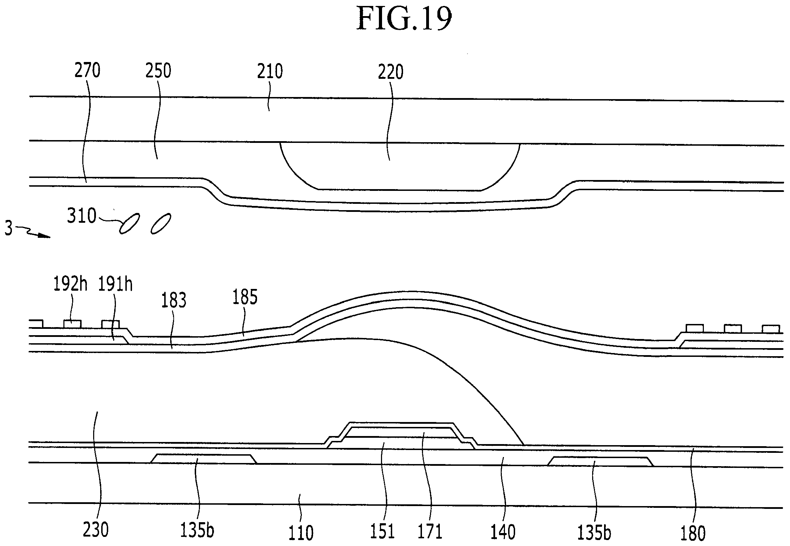

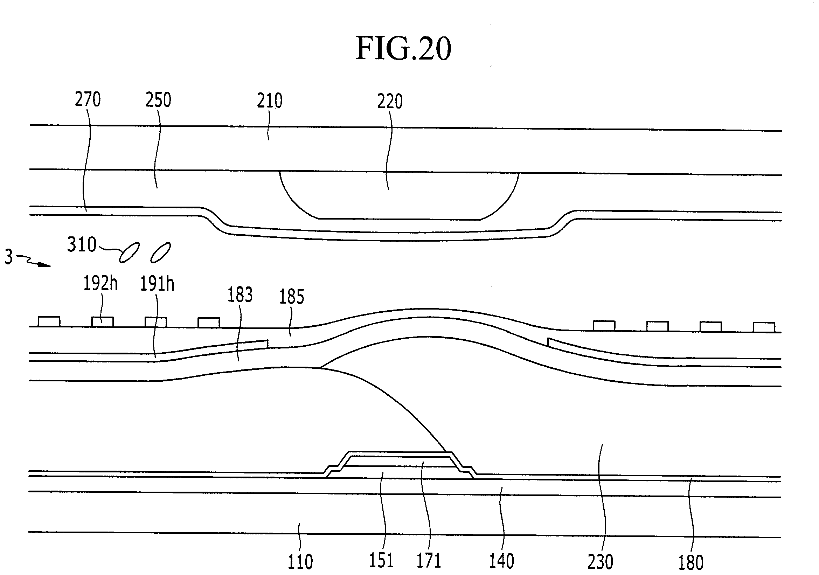

Hereinafter, another alternative exemplary embodiment of the display device will be described with reference to FIGS. 19 and 20.

FIGS. 19 to 20 are cross-sectional views of a pixel of an exemplary embodiment of a display device according to the invention.

The display device in FIGS. 19 to 20 is substantially the same as the display device shown in FIGS. 1 and 2, and the same or like elements shown in FIGS. 19 and 20 have been labeled with the same reference characters as used above to describe the exemplary embodiments of the display device shown in FIGS. 1 and 2.

First, FIG. 19 is a cross-sectional view of an exemplary embodiment in which a pair of horizontal storage electrode parts 135b is disposed at sides of the data line 171 as in the exemplary embodiment of FIGS. 1 and 2.

A region where the horizontal storage electrode part 135b is formed is a region through which light does not pass, and an aperture ratio deteriorates in the region. According to an exemplary embodiment, the light blocking member 220 may cover the horizontal storage electrode part 135b.

In an alternative exemplary embodiment, as shown in FIG. 20, the horizontal storage electrode part 135b is omitted such that transmittance is improved by increasing an aperture ratio.

In an exemplary embodiment, as shown in FIGS. 19 and 20, the color filter 230 is disposed on the first insulation substrate 110, and the second passivation layer 183 is disposed on the color filter 230.

In such an embodiment, as shown in FIGS. 19 and 20, a lower semiconductor layer 151 below the data line 171 may be etched using a mask that used to provide the data line 171.

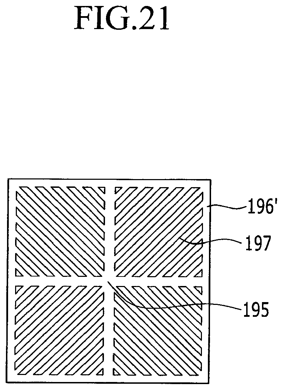

Hereinafter, structures of various exemplary embodiments of the second electrode 192 will be described with reference to FIGS. 21 to 23.

FIGS. 21 to 23 are top plan views of exemplary embodiments of a second electrode according to the invention.

First, an exemplary embodiment of the second electrode 192 of FIG. 21 is substantially the same as the second electrode 192 shown in FIG. 1 except that outer sides of the minute branch electrode 197 and the stem electrode 195 are surrounded by an outer portion 196'.

An exemplary embodiment of the second electrode 192 of FIG. 21 includes the minute branch electrode 197, the stem electrode 195 and the outer portion 196'. The outer portion 196' surrounds the minute branch electrode 197 and the stem electrode 195 such that an opening surrounded by the minute branch electrode 197, the stem electrode 195 and the outer portion 196' is defined therein.

The exemplary embodiment of FIG. 21 may further include a connection portion (see 196 of FIG. 1) which laterally extends in the outer portion 196'.

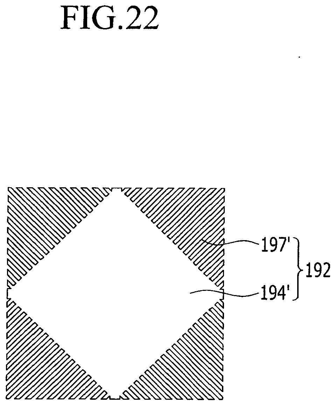

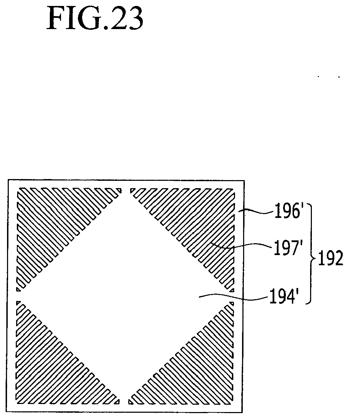

In an alternative exemplary embodiment, the second electrode 192 may have a partial planar electrode 194' instead of the stem electrode 195 as shown in FIGS. 22 and 23.

An exemplary embodiment of the second electrode 192 including the partial planar electrode 194' will be described in FIG. 22.

In an exemplary embodiment, a partial planar electrode 194' disposed at a center portion of in the first or second subpixel area and a plurality of minute branch electrodes 197' protruding from the partial planar electrode 194' in an oblique direction are included. In such an embodiment, the partial planar electrode 194' may have a rhombus-like shape, e.g., a regular shape as shown in FIG. 22. The minute branch electrode 197' may extend at an angle of about 45 degrees with respect to the gate line or the data line. In an alternative exemplary embodiment, the minute branch electrode 197' may extend from a side of the partial planar electrode 194' in a vertical direction with respect to the side.

In an alternative exemplary embodiment, referring to FIG. 23, the second electrode 192 may further include the outer portion 196'. The outer portion 196' has a structure surrounding the partial planar electrode 194' and the minute branch electrode 197'. In such an embodiment, an opening surrounded by the minute branch electrode 197', the partial planar electrode 194', and the outer portion 196' is defined.

In an alternative exemplary embodiment, the second electrode 192 may include only the minute branch electrodes which extend only in one direction in a subpixel area. In such an embodiment, the minute branch electrodes may be substantially parallel with the gate line or the data line or may be tilted at a predetermined angle (for example, about 45 degrees) with the gate line or the data line.

## Claims

1. A liquid crystal display device (100), comprising:
a first substrate (110);
a second substrate (210) disposed opposite to the first substrate;
a liquid crystal layer (3) disposed between the first substrate and the second substrate and comprising liquid crystal molecules (310) which are substantially vertically aligned when an electric field is not generated in the liquid crystal layer; and
a plurality of pixels, each of which comprises a first subpixel and a second subpixel, wherein each of the first subpixel and the second subpixel comprises:
a first electrode (191h, 191l) formed as a planar electrode in a shape of flat plate and disposed on the first substrate;
a second electrode (192h, 192l) disposed on the first substrate and opposite to and spaced apart from the first electrode and comprising a linear electrode; and
a third electrode (270) formed as a planar electrode in a shape of flat plate disposed on the second substrate;
wherein the first electrode of the first subpixel and the first electrode of the second subpixel are electrically connected to each other, and
the third electrode of the first subpixel and the third electrode of the second subpixel are electrically connected to each other; and
wherein the liquid crystal display device is configured to apply:
a common potential to either the first electrodes or the third electrodes of both subpixels,
a potential to the second electrode of the first subpixel that is different from a potential applied to the second electrode of the second subpixel, wherein the two different potentials applied to the second electrodes are two different bias potentials or at most one of the two different potentials applied to the second electrodes is a float potential.

2. The liquid crystal display device of claim 1, wherein when one of the first and third electrodes of each subpixel receives a common potential, the other of the first and the third electrodes of each subpixel receives a data potential.

3. The liquid crystal display device of any one of claims 1 and 2, wherein when one of the potentials applied to the second electrodes is a floating potential, the other one of the potentials applied to the second electrodes is a data potential or a common potential.

4. The liquid crystal display device of claim 3, wherein when one of the potentials applied to the second electrodes is a floating potential, the other one of the potentials applied to the second electrodes is equal to the potential of the first electrodes.

5. The liquid crystal display device of any one of preceding claims 1 to 4, comprising further an intermediate passivation layer (185) between the second electrodes and the first electrodes of the pixel.

6. The liquid crystal display device of claim 1, wherein the third electrode of a pixel is electrically connected to the third electrode of an adjacent pixel.

7. The liquid crystal display device of claim 6, wherein the two different bias potentials comprising a first bias potential applied to the second electrode of the first subpixel and a second bias potential applied to the second electrode of the second subpixel, the first and second bias potentials have different predetermined levels.

8. The liquid crystal display device of claim 7, wherein at least one of the first and second bias potentials is a storage potential.

9. The liquid crystal display device of claim 7, wherein the first bias potential is the data potential.

10. The liquid crystal display device of claim 6, configured to receive a first bias potential having a predetermined level on the second electrode of the first subpixel, and
wherein the second electrode of the second subpixel is a floating electrode which does not receive a potential.

11. The liquid crystal display device of claim 10, wherein the first bias potential is a storage potential.

12. The liquid crystal display device of claim 10, wherein the first bias potential is the data potential.

13. The liquid crystal display device of claim 1, wherein the first electrode (191h) of the first subpixel and the first electrode (191l) of the second subpixel in a pixel are electrically connected to each other, and the second electrode (192h) of the first subpixel and the second (1921) electrode of the second subpixel in an adjacent pixel are electrically connected to each other.

## Patentansprüche

1. Flüssigkristallanzeigevorrichtung (100), umfassend:
ein erstes Substrat (110);
ein zweites Substrat (210), angeordnet gegenüber dem ersten Substrat;
eine Flüssigkristallschicht (3), angeordnet zwischen dem ersten Substrat und dem zweiten Substrat und Flüssigkristallmoleküle (310) umfassend, die im Wesentlichen senkrecht ausgerichtet sind, wenn kein elektrisches Feld in der Flüssigkristallschicht erzeugt wird; und
eine Mehrzahl von Pixeln, von denen jedes ein erstes Subpixel und ein zweites Subpixel umfasst, wobei jedes des ersten Subpixels und des zweiten Subpixels umfasst:
eine erste Elektrode (191h, 191l), ausgebildet als planare Elektrode in Form einer flachen Platte und angeordnet auf dem ersten Substrat;
eine zweite Elektrode (192h, 192l), angeordnet auf dem ersten Substrat und gegenüber und beabstandet von der ersten Elektrode und eine lineare Elektrode umfassend; und
eine dritte Elektrode (270), ausgebildet als planare Elektrode in Form einer flachen Platte, angeordnet auf dem zweiten Substrat;
wobei die erste Elektrode des ersten Subpixels und die erste Elektrode des zweiten Subpixels elektrisch miteinander verbunden sind, und
die dritte Elektrode des ersten Subpixels und die dritte Elektrode des zweiten Subpixels elektrisch miteinander verbunden sind; und
wobei die Flüssigkristallanzeigevorrichtung ausgelegt ist zum Anlegen:
eines gemeinsamen Potenzials entweder an die ersten Elektroden oder an die dritten Elektroden von beiden Subpixeln,
eines Potenzials an die zweite Elektrode des ersten Subpixels, das sich von einem an die zweite Elektrode des zweiten Subpixels angelegten Potenzial unterscheidet, wobei die an die zweiten Elektroden angelegten zwei unterschiedlichen Potenziale zwei unterschiedliche Vorspannungspotenziale sind oder höchstens eines der an die zweiten Elektroden angelegten zwei unterschiedlichen Potenziale ein Schwebepotenzial ist.

2. Flüssigkristallanzeigevorrichtung nach Anspruch 1, wobei, wenn eines von den ersten und den dritten Elektroden jedes Subpixels ein gemeinsames Potenzial erhält, das andere von den ersten und den dritten Elektroden jedes Subpixels ein Datenpotenzial erhält.

3. Flüssigkristallanzeigevorrichtung nach einem der Ansprüche 1 und 2, wobei, wenn eines von den an die zweiten Elektroden angelegten Potenzialen ein Schwebepotenzial ist, das andere von den an die zweiten Elektroden angelegten Potenzialen ein Datenpotenzial oder ein gemeinsames Potenzial ist.

4. Flüssigkristallanzeigevorrichtung nach Anspruch 3, wobei, wenn eines von den an die zweiten Elektroden angelegten Potenzialen ein Schwebepotenzial ist, das andere von den an die zweiten Elektroden angelegten Potenzialen gleich dem Potenzial der ersten Elektroden ist.

5. Flüssigkristallanzeigevorrichtung nach einem der vorangehenden Ansprüche 1 bis 4, umfassend weiterhin eine dazwischenliegende Passivierungsschicht (185) zwischen den zweiten Elektroden und den ersten Elektroden des Pixels.

6. Flüssigkristallanzeigevorrichtung nach Anspruch 1, wobei die dritte Elektrode eines Pixels elektrisch verbunden mit der dritten Elektrode eines benachbarten Pixels ist.

7. Flüssigkristallanzeigevorrichtung nach Anspruch 6, wobei die zwei unterschiedlichen Vorspannungspotenziale ein an die zweite Elektrode des ersten Subpixels angelegtes erstes Vorspannungspotenzial und ein an die zweite Elektrode des zweiten Subpixels angelegtes zweites Vorspannungspotenzial umfassen, das erste und das zweite Vorspannungspotenzial unterschiedliche vorgegebene Werte haben.

8. Flüssigkristallanzeigevorrichtung nach Anspruch 7, wobei mindestens eines von dem ersten und dem zweiten Vorspannungspotenzial ein Speicherpotenzial ist.

9. Flüssigkristallanzeigevorrichtung nach Anspruch 7, wobei das erste Vorspannungspotenzial das Datenpotenzial ist.

10. Flüssigkristallanzeigevorrichtung nach Anspruch 6, ausgelegt zum Erhalten eines ersten Vorspannungspotenzials mit einem vorgegebenen Wert an der zweiten Elektrode des ersten Subpixels, und
wobei die zweite Elektrode des zweiten Subpixels eine Schwebeelektrode ist, die kein Potenzial erhält.

11. Flüssigkristallanzeigevorrichtung nach Anspruch 10, wobei das erste Vorspannungspotenzial ein Speicherpotenzial ist.

12. Flüssigkristallanzeigevorrichtung nach Anspruch 10, wobei das erste Vorspannungspotenzial das Datenpotenzial ist.

13. Flüssigkristallanzeigevorrichtung nach Anspruch 1, wobei die erste Elektrode (191h) des ersten Subpixels und die erste Elektrode (191l) des zweiten Subpixels in einem Pixel elektrisch miteinander verbunden sind, und die zweite Elektrode (192h) des ersten Subpixels und die zweite Elektrode (192l) des zweiten Subpixels in einem benachbarten Pixel elektrisch miteinander verbunden sind.

## Revendications

1. Dispositif d'affichage à cristaux liquides (100), comprenant :
un premier substrat (110) ;
un second substrat (210) disposé en regard du premier substrat ;
une couche de cristaux liquides (3) disposée entre le premier substrat et le second substrat et comprenant des molécules de cristaux liquides (310) qui sont alignées sensiblement verticalement lorsqu'un champ électrique n'est pas généré dans la couche de cristaux liquides ; et
une pluralité de pixels, chacun comprenant un premier sous-pixel et un second sous-pixel, chaque premier sous-pixel et second sous-pixel comprenant :
une première électrode (191h, 1911) formée en tant qu'électrode plane sous la forme d'une plaque plate et disposée sur le premier substrat ;
une deuxième électrode (192h, 1921) disposée sur le premier substrat et en regard, et espacée, de la première électrode et comprenant une électrode linéaire ; et
une troisième électrode (270) formée en tant qu'électrode plane sous la forme d'une plaque plate et disposée sur le second substrat ;
dans lequel la première électrode du premier sous-pixel et la première électrode du second sous-pixel sont reliées électriquement l'une à l'autre, et
la troisième électrode du premier sous-pixel et la troisième électrode du second sous-pixel étant reliées électriquement l'une à l'autre ; et
le dispositif d'affichage à cristaux liquides étant configuré pour appliquer :
un potentiel commun soit aux premières électrodes, soit aux troisièmes électrodes des deux sous-pixels,
un potentiel à la deuxième électrode du premier sous-pixel qui est différent d'un potentiel appliqué à la deuxième électrode du second sous-pixel, les deux potentiels différents appliqués aux deuxièmes électrodes étant deux potentiels de polarisation différents ou, au plus, l'un des deux potentiels différents appliqués aux deuxièmes électrodes étant un potentiel flottant.

2. Dispositif d'affichage à cristaux liquides selon la revendication 1, dans lequel lorsque l'une des première et troisième électrodes de chaque sous-pixel reçoit un potentiel commun, l'autre des première et troisième électrodes de chaque sous-pixel reçoit un potentiel de données.

3. Dispositif d'affichage à cristaux liquides selon l'une quelconque des revendications 1 et 2, dans lequel lorsque l'un des potentiels appliqués aux deuxièmes électrodes est un potentiel flottant, l'autre des potentiels appliqués aux deuxièmes électrodes est un potentiel de données ou un potentiel commun.

4. Dispositif d'affichage à cristaux liquides selon la revendication 3, dans lequel lorsque l'un des potentiels appliqués aux deuxièmes électrodes est un potentiel flottant, l'autre des potentiels appliqués aux deuxièmes électrodes est égal au potentiel des premières électrodes.

5. Dispositif d'affichage à cristaux liquides selon l'une des revendications précédentes 1 à 4, comprenant, en outre, une couche de passivation intermédiaire (185) entre les deuxièmes électrodes et les premières électrodes du pixel.

6. Dispositif d'affichage à cristaux liquides selon la revendication 1, dans lequel la troisième électrode d'un pixel est reliée électriquement à la troisième électrode d'un pixel adjacent.

7. Dispositif d'affichage à cristaux liquides selon la revendication 6, dans lequel les deux potentiels de polarisation différents comprenant un premier potentiel de polarisation appliqué à la deuxième électrode du premier sous-pixel et un second potentiel de polarisation appliqué à la deuxième électrode du second sous-pixel, les premier et second potentiels de polarisation ont des niveaux prédéterminés différents.

8. Dispositif d'affichage à cristaux liquides selon la revendication 7, dans lequel au moins l'un des premier et second potentiels de polarisation est un potentiel de stockage.

9. Dispositif d'affichage à cristaux liquides selon la revendication 7, dans lequel le premier potentiel de polarisation est le potentiel de données.

10. Dispositif d'affichage à cristaux liquides selon la revendication 6, configuré pour recevoir un premier potentiel de polarisation ayant un niveau prédéterminé sur la deuxième électrode du premier sous-pixel, et dans lequel
la deuxième électrode du second sous-pixel est une électrode flottante qui ne reçoit pas de potentiel.

11. Dispositif d'affichage à cristaux liquides selon la revendication 10, dans lequel le premier potentiel de polarisation est un potentiel de stockage.

12. Dispositif d'affichage à cristaux liquides selon la revendication 10, dans lequel le premier potentiel de polarisation est le potentiel de données.

13. Dispositif d'affichage à cristaux liquides selon la revendication 1, dans lequel la première électrode (191h) du premier sous-pixel et la première électrode (1911) du second sous-pixel dans un pixel sont reliées électriquement l'une à l'autre, et la deuxième électrode (192h) du premier sous-pixel et la deuxième électrode (1921) du second sous-pixel dans un pixel adjacent sont reliées électriquement l'une à l'autre.
